# EUROPEAN PATENT SPECIFICATION

(11) **EP 3 730 200 B1**
(45) Date of publication and mention of the grant of the patent: **24.08.2022**
(21) Application number: 18855152.7
(22) Date of filing: 05.12.2018
(51) Int. Cl.: B01D 37/04, B01D 37/02, C02F 1/00, B01D 29/60, B01D 29/94

(54) **IMPROVED FILTER SYSTEM**
VERBESSERTES FILTERSYSTEM
SYSTÈME DE FILTRATION PERFECTIONNÉ

(30) Priority: 19.12.2017 ES 201731427
(43) Date of publication of application: 28.10.2020
(73) Proprietor: Vitrosep, S.L., 17600 Figueres (ES)
(72) Inventor: SAIS MASCORT, Josep, 17457 RIUDELLOTS DE LA SELVA (ES)
(74) Representative: Isern Patentes y Marcas S.L.
(86) International application number: PCT/ES2018/070789
(87) International publication number: WO 2019/122471

(56) References cited:
- WO-A1-99/65592
- WO-A1-2017/013301
- JP-A- 2006 167 591
- US-A- 3 693 797

## Description

### OBJECT OF THE INVENTION

The object of the present patent application is to register an improved filtering system, which incorporates notable innovations and advantages over the techniques used hitherto.

More specifically, the invention proposes the development of an improved filtering system that, due to the particular arrangement thereof, enables the inlet conditions of a liquid medium into a filter to be adjusted in order to optimise the operation thereof.

### BACKGROUND OF THE INVENTION

Filters are known in the current state of the art that are used in filtering liquid mediums, such as for example water, for filtering and eliminating elements in suspension.

However, the suitable control of said filters is sometimes difficult, especially due to its particular sensitivity to the operating conditions thereof, and therefore to the inlet conditions of the liquid medium involved, all of them being able to vary constantly.

This is especially the case when a coadjuvant product is added to the liquid medium before the inlet thereof in the filter.

At the prior art related to the purposed invention, the documents JP2006167591A and WO2017/013301A are known.

The present invention helps to solve and resolve the present problem since it allows the inlet conditions of a liquid medium into a filter to be adjusted in order to optimise the operation and performance thereof.

### DESCRIPTION OF THE INVENTION

The present invention has been developed in order to provide an improved filtering system according to claim 1, suitable for filtering and eliminating particles in suspension of a liquid medium, comprising a collection tank for the liquid medium, a filter, propelling means for the liquid medium from the collection tank to the filter, characterised in that it further comprises stirring means of the liquid medium in the tank, means for measuring the turbidity of the liquid medium in the tank, dosage means of a filtering coadjuvant product in the tank, means for measuring the operating flowrate of the filter, and processing means, the processing means being linked in data communication with the stirring means of the liquid medium in the tank, the means for measuring the turbidity of the liquid medium in the tank, the dosage means of a filtering coadjuvant product in the tank, the means for measuring the operating flowrate of the filter and the propelling means for the liquid medium, and having the capacity to regulate the stirring means of the liquid medium, the dosage means of a coadjuvant product and the propelling means for the liquid medium.

Preferably, the liquid medium in the improved filtering system is water.

Additionally, the liquid medium in the improved filtering system is water with glass or similar particles in suspension, or also other special materials that are commonly used in the optical industry.

Alternatively, the filter in the improved filtering system is a precoat pressure filter.

Additionally, the stirring means of the liquid medium in the tank in the improved filtering system comprise a rotary stirrer with a vertical shaft and a variable speed drive controlled from the processing means.

Preferably, the processing means in the improved filtering system comprise a microprocessor.

Alternatively, the means for measuring the turbidity of the liquid medium in the improved filtering system comprise a turbidity sensor.

Alternatively, the means for measuring the operating flowrate of the filter in the improved filtering system comprise a flowmeter.

Alternatively, the propelling means for the liquid medium from the collection tank to the filter in the improved filtering system comprise a pump.

Additionally, the improved filtering system further comprises another collection tank for the now treated water from the filter, and another turbidity sensor and another additional stirrer in said tank linked in data communication with the processing means, the processing means having the capacity to regulate the additional stirrer.

Additionally, the improved filtering system further comprises means for controlling the quality of the waste of the filter linked in data communication with the processing means, and which comprise a conveyor and weighing belt for waste from the filter, a visualisation device over said waste, means for measuring the humidity of the waste, means for measuring the volume of the waste, another tank and another pump.

Additionally, the means for controlling the quality of the waste in the improved filtering system incorporate analogue and digital input and output modules to communicate with the processing means.

Additionally, the visualisation device over the waste in the improved filtering system is capable of measuring macroscopic properties of the waste itself, and comprises a video camera and a communication system, in data communication related to images of the waste with the processing means, the processing means also being equipped with an analysis program for the images received with the ability to compare these images with an image library stored in the memory of the processing means.

Alternatively, the means for measuring the humidity in the improved filtering system comprise a conductivity measuring sensor.

Alternatively, the means for measuring the volume in the improved filtering system comprise a piece by way of a candela or elongated cylinder, and the lateral surface of said piece being enabled for the adhesion of a waste cake or plate from the filter.

Alternatively, the collection tank of water to be treated in the improved filtering system has a vertical arrangement with an essentially rectangular polygonal geometry plane.

Alternatively, the collection tank of the now treated water from the filter in the improved filtering system has a vertical arrangement with an essentially rectangular polygonal geometry plane.

The invention also includes the use of the described improved filtering system to eliminate glass particles in suspension present in a liquid medium, resulting from the use of said liquid medium to cool diamond grinding points used for applications in the glass industry.

Due to the present invention, the inlet conditions of a liquid medium are adjusted in order to optimise the operation and performance thereof. Other characteristics and advantages of the improved filtering system will be evident from the description of a preferred, but not exclusive embodiment which is illustrated by way of non-limiting example in the drawings which are included, in which:

### BRIEF DESCRIPTION OF THE DRAWINGS

Fig. 1 is a schematic view of a preferred embodiment of the improved filtering system of the present invention.
Figure 2 is a schematic view of a piece by way of candela or elongated cylinder in means for measuring the volume of the waste created by the filter, enabled so that a waste cake or plate of the filter is adhered covering the lateral surface thereof, in a preferred embodiment of the improved filtering system of the present invention.

### DESCRIPTION OF A PREFERRED EMBODIMENT

The improved filtering system of the invention is enabled for filtering and eliminating particles in suspension of a liquid means, and comprises a collection tank 1 for the liquid medium, a filter 2 and propelling means for the liquid medium from the collection tank 1 to the filter 2.

The improved filtering system of the invention further comprises stirring means of the liquid medium in the tank 1, means for measuring the turbidity of the liquid medium in the tank 1, dosage means 3 of a filtering coadjuvant product in the tank 1, means for measuring the operating flowrate of the filter, and processing means.

The processing means are linked in data communication with the stirring means of the liquid medium in the tank, the means for measuring the turbidity of the liquid medium in the tank, the dosage means 3 of a filtering coadjuvant product in the tank 1, the means for measuring the operating flowrate of the filter 2 and the propelling means for the liquid medium, and also having the capacity to regulate the stirring means of the liquid medium, the dosage means 3 of a coadjuvant product and the propelling means for the liquid medium.

In this preferred embodiment, the liquid medium is water with glass particles or similar in suspension, or also other special materials that are commonly used in the optical industry, from a polishing treatment with diamond grinding points.

Moreover, in this preferred embodiment, the filter 2 is a precoat pressure filter, and the stirring means of the water to be treated in the tank comprise a rotary stirrer 4 with a vertical shaft and a variable speed drive controlled from the processing means.

Furthermore, the means for measuring the turbidity of the liquid medium comprise a turbidity sensor 5, the means for measuring the operating flowrate of the filter comprise a flowmeter 6, the processing means comprise a microprocessor 7 and the propelling means comprise a pump 8.

The dosage means 3 of a filtering coadjuvant product in the tank 1 are known in the state of the art.

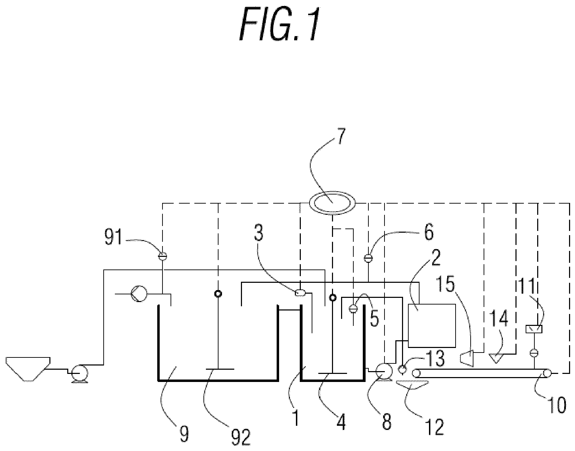

Said microprocessor 7 is therefore linked in data communication with the turbidity sensor 5 and the flowmeter 6, as shown schematically by the dashed lines of figure 1, and therefore is programmed to receive and process the data received from the turbidity sensor 5 and the flowmeter 6.

The microprocessor 7, according to the turbidity values received from the turbidity sensor 5 and the operating flowrate of the filter 2 received from the flowmeter 6, calculates and establishes a series of parameters, such as the rotation speed of the rotating stirrer 4 with a vertical shaft, as well as the amount and concentration suitable and necessary of the filtering coadjuvant product to be added into the water of the tank 1 by means of the dosage means 3, and also the work speed of the pump 8, to thus optimise the operation of the same filter 2.

At the same time, the microprocessor 7 has the capacity to regulate the stirrer 4 of the water, the dosage means 3 and the propelling pump 8, as schematically shown by the dashed lines of figure 1.

As noted above, once the microprocessor 7 has calculated and established the rotation speed of the rotating stirrer 4, the value of the amount and concentration suitable and necessary of the filtering coadjuvant product in the filter 2, and the rotation speed of the pump 8, the microprocessor 7 itself regulates the rotating stirrer 4, the dosage means 3 of the coadjuvant product and the pump 8, for the suitable stirring of the water and for the amount and concentration required and established of the coadjuvant product in the filter 2 as well as the flowrate of the water to be treated.

For all the foregoing, the microprocessor 7 incorporates software suitable for this purpose.

As a result of the control and regulation of the microprocessor 7 over the stirrer 4, the dosage means 3 of the coadjuvant product and the pump 8, possible sedimentation in the tank 1 is prevented and the correct homogenisation of the liquid medium or water is achieved, which entails an optimal operation and performance of the filter 2, for example reducing the consumption of coadjuvant product and therefore reducing the cost of operation and functioning of the filter 2 itself, and also reducing the wear of the filter 2.

In other preferred embodiments, the improved filtering system of the invention further comprises another collection tank 9 of the now treated water from the filter 2, as well as another turbidity sensor 91 and another additional stirrer 92 in said tank 9.

The microprocessor 7 is also linked in data communication with the turbidity sensor 91 and the additional stirrer 92 of the collection tank 9 of now treated water, and having the capacity to regulate said additional stirrer 92, as schematically shown by the dashed lines of figure 1.

The turbidity sensor 91 communicates its data to the microprocessor 7, and according to the same, it controls the additional stirrer 92, in order to thus prevent possible sedimentation in said collection tank 9 of now treated water.

The collection tank 1 of the water to be treated or the other collection tank 9 of now treated water from the filter 2 can have a vertical arrangement with an essentially rectangular polygonal geometry plane.

In other preferred embodiments, the improved filtering system of the invention can also incorporate means for controlling the quality of waste from the filter 2.

Said means for controlling the quality of the waste comprise a conveyor belt 10 where the waste from the filter 2 is poured and moved, also with the capacity to weigh the same, a visualisation device 11 over said waste, means for measuring the humidity 14 of the waste, means for measuring the volume 15 of the waste, another tank 12 and another pump 13.

The microprocessor 7 is also linked in data communication with said means for controlling the quality of waste from the filter 2. In this regard, it receives weight data of the waste from the weighing on the conveyor belt 10, the data obtained by said visualisation device 11, the data obtained by the means for measuring the humidity 14 of the waste, and the data from the means for measuring the volume 15 of the waste, as schematically shown by the dashed lines of figure 1.

In the improved filtering system of the invention, the conveyor belt 10 with the capacity to weigh, the visualisation device 11 over the waste, the means for measuring the humidity 14 of the waste and the means for measuring the volume 15 of the waste, can incorporate analogue and digital input and output modules to communicate with the microprocessor 7.

The visualisation device 11 over the waste carries out a measurement of macroscopic properties (they can be related to the nature of the texture thereof, such as for example the grain size, configuration, etc., or other properties known in the state of the art) of said waste deposited and weighed on the conveyor belt 10, such as for example by means of an image analysis system in a video camera using a suitable image recognition software.

The visualisation device 11, which comprises a video camera and a communication system, sends image data of the waste to the microprocessor 7, which is equipped with an image analysis program which compares them with an image library stored in the memory in order to evaluate the quality of a waste cake or plate.

The means for measuring the humidity 14 of the waste are based on techniques already known in the state of the art, such as for example by means of a conductivity measuring sensor applying a high frequency electrical field, microwaves electromagnetic waves, etc.

The means for measuring the volume 15 of the waste can act in different ways.

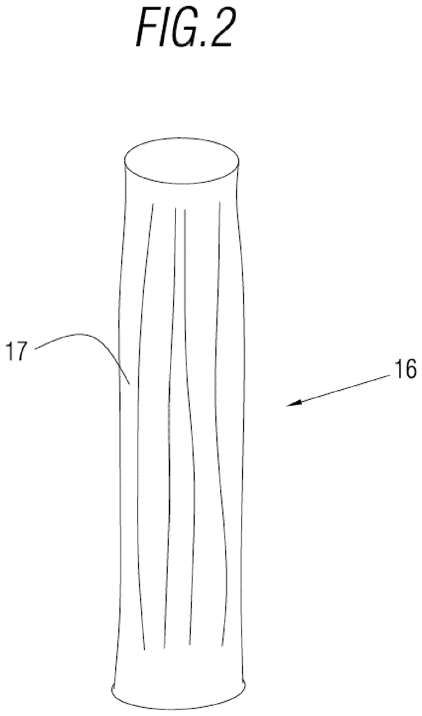

As can be schematically seen in figure 2, said means for measuring volume 15 can comprise a piece 16 by way of a candela or elongated cylinder inside the same filter 2, wherein a waste cake or plate of the filter 2 is adhered covering the lateral surface 17 thereof and before exiting the filter 2 itself.

Inside the filter 2 itself, it is possible to measure the thickness of the waste cake using an IR light beam that is reflected when it encounters an obstacle. A phototransistor creates a current that is proportional to the distance at which the obstacle is located, as is known in the state of the art. This enables the thickness of the waste cake covering the lateral surface 17 of the piece 16 to be obtained, and based on the dimensions and geometry of the piece 16, thus obtain the volume of the waste cake.

In other preferred embodiments of the means for measuring the volume 15, the same thickness of the waste cake can be determined by means of an ultrasound probe, and on the conveyor belt 10 itself wherein the waste is weighed.

In particular, using the weight data received for the waste cake and volume measurement of the same waste cake, the microprocessor 7 can then calculate the density of said waste.

As noted above, the microprocessor 7 is programmed to process these weight data from the conveyor belt 10, the data obtained by the means for measuring the humidity 14 of the waste, the data obtained by the means for measuring the volume 15 of the waste, the data from said visualisation device 11 and, together with the data from the turbidity sensor 91 of the collection tank 9 of no treated water, determine the level of suitability of the operation of the filter 2, and thus be able to act on the stirrer 4, the dosage means 3 of a coadjuvant product and the pump 8, to thus further optimise the operation of the filter 2.

The water from pouring the waste onto the conveyor belt 10 collects in the tank 12, and the pump 13 pumps said water to the collection tank 1.

The use of the measurement of the turbidity in the present invention results because the presence of solids in suspension in a liquid medium, in this case glass particles in suspension in the water, causes a loss of transparency, that it to say, it creates turbidity. The turbidity thus provides an indirect estimation of the concentration of solids in suspension which is a parameter that is sometimes difficult to measure correctly and especially, continuously.

The turbidity is therefore an important and useful indicator of the quality of the water. It is a quantitative measurement of the undissolved solids which may be used at the inlet of a water treatment system, for example.

This is why the present invention covers the measurement of the turbidity in order to continuously establish the initial quality of the water prior to its entry into the filter 2 itself.

The turbidity is usually measured in nephelometric turbidity units, usually expressed with the acronym NTU.

In this sense, the methods ISO 7027 and USEPA are known in the state of the art, which use an infrared light, measuring the light dispersed at an angle of 90 degrees.

A very useful application of the improved filtering system of the invention can be, for example, in the use thereof to filter and eliminate the glass particles in suspension present in a liquid medium or water, resulting from the use of said liquid medium or water in the cooling of diamond grinding points used for different applications in the glass industry, such as for example correcting, bevelling or polishing glass edges.

The improved filtering system of the present invention, due to the concept and performance thereof, is especially very suitable for the automated operation thereof.

The details, shapes, dimensions and other accessory elements, as well as the materials used to manufacture the improved filtering system of the invention, may be suitably substituted for others which are technically equivalent, and do not diverge from the essential nature of the invention, nor the scope defined by the claims included below.

## Claims

1. An improved filtering system, suitable for filtering and eliminating particles in suspension of a liquid medium, comprising a collection tank (1) for the liquid medium, a filter (2), propelling means for the liquid medium from the collection tank (1) to the filter (2), and it further comprises stirring means of the liquid medium in the tank (1), means for measuring the turbidity of the liquid medium in the tank (1), dosage means (3) of a filtering coadjuvant product in the tank (1), means for measuring the operating flowrate of the filter (2), and processing means, the processing means being linked in data communication with the stirring means of the liquid medium in the tank (1), the means for measuring the turbidity of the liquid medium in the tank (1), the dosage means of a filtering coadjuvant product in the tank (1), the means for measuring the operating flowrate of the filter (2) and the propelling means for the liquid medium, and having the capacity to regulate the stirring means of the liquid medium, the dosage means (3) of a coadjuvant product and the propelling means for the liquid medium,
**characterised in that** it further comprises another collection tank (9) of the now treated water from the filter (2), and another turbidity sensor (91) and another additional stirrer (92) in said tank (9) linked in data communication with the processing means, the processing means having the capacity to regulate the additional stirrer (92), and it also further comprises means for controlling the quality of the waste of the filter (2) linked in data communication with the processing means, and which comprise a conveyor (10) and weighing belt for waste from the filter (2), a visualisation device (11) over said waste, means for measuring the humidity (14) of the waste, means for measuring the volume (15) of the waste, another tank (12) and another pump (13).

2. The improved filtering system according to claim 1, **characterised in that** the liquid medium is water.

3. The improved filtering system according to claim 2, **characterised in that** the liquid medium is water with glass particles or similar in suspension, or other special materials that are commonly used in the optical industry.

4. The improved filtering system according to claim 1, **characterised in that** the filter (2) is a precoat pressure filter.

5. The improved filtering system according to claim 1, **characterised in that** the stirring means of the liquid medium in the tank comprise a rotary stirrer (4) with a vertical shaft and a variable speed drive controlled from the processing means.

6. The improved filtering system according to claim 1, **characterized in that** the processing means comprise a microprocessor (7).

7. The improved filtering system according to claim 1, **characterized in that** the means for measuring the turbidity of the liquid medium comprise a turbidity sensor (5).

8. The improved filtering system according to claim 1, **characterized in that** the means for measuring the operating flowrate of the filter comprise a flowmeter (6).

9. The improved filtering system according to claim 1, **characterised in that** the propelling means for the liquid medium from the collection tank (1) to the filter (2) comprise a pump (8).

10. The improved filtering system according to claim 1, **characterised in that** the means for controlling the quality of the waste incorporate analogue and digital input and output modules for communicating with the processing means.

11. The improved filtering system according to claim 1, **characterised in that** the visualisation device (11) over the waste is capable of measuring macroscopic properties of the waste itself, and comprises a video camera and a communication system, in data communication related to images of the waste with the processing means, the processing means also being equipped with an analysis program for the images received with the ability to compare these images with an image library stored in the memory of the processing means.

12. The improved filtering system according to claim 1, **characterized in that** the means for measuring the humidity (14) comprise a conductivity measuring sensor.

13. The improved filtering system according to claim 1, **characterised in that** the means for measuring the volume (15) comprise a piece (16) by way of a candela or elongated cylinder, and the lateral surface (17) of said piece (16) being enabled for the adhesion of a waste cake or plate from the filter (2).

14. The improved filtering system, according to claim 1, **characterised in that** the collection tank (1) for water to be treated has a vertical arrangement with an essentially rectangular polygonal geometry plane.

15. The improved filtering system, according to claim 1, **characterised in that** the collection tank (9) for the now treated water from the filter (2) has a vertical arrangement with an essentially rectangular polygonal geometry plane.

16. A use of the improved filtering system described in some of the preceding claims, in order to eliminate glass particles in suspension present in a liquid medium, resulting from the use of said liquid medium to cool diamond grinding points used for applications in the glass industry.

## Patentansprüche

1. Verbessertes Filtersystem, das zum Filtern und Beseitigen von Partikeln in Suspension eines flüssigen Mediums geeignet ist und einen Sammeltank (1) für das flüssige Medium, ein Filter (2), Beförderungsmittel für das flüssige Medium vom Sammeltank (1) zum Filter (2) umfasst und ferner Rührmittel des flüssigen Mediums im Tank (1), Mittel zum Messen der Trübung des flüssigen Mediums im Tank (1), Dosiermittel (3) eines Filterhilfsprodukts im Tank (1), Mittel zum Messen der Betriebsdurchflussrate des Filters (2) und Verarbeitungsmittel umfasst, wobei die Verarbeitungsmittel mit den Rührmitteln des flüssigen Mediums im Tank (1), den Mitteln zum Messen der Trübung des flüssigen Mediums im Tank (1), den Dosiermitteln eines Filterhilfsprodukts im Tank (1), den Mitteln zum Messen der Betriebsdurchflussrate des Filters (2) und den Beförderungsmitteln für das flüssige Medium in Datenkommunikation verbunden sind und die Fähigkeit aufweisen, die Rührmittel des flüssigen Mediums, die Dosiermittel (3) eines Hilfsprodukts und die Beförderungsmittel des flüssigen Mediums zu regeln,
**dadurch gekennzeichnet, dass** es ferner einen weiteren Sammeltank (9) des jetzt behandelten Wassers vom Filter (2) und einen weiteren Trübungssensor (91) und ein weiteres zusätzliches Rührwerk (92) im Tank (9), umfasst, die mit den Verarbeitungsmitteln in Datenkommunikation verbunden sind, wobei die Verarbeitungsmittel die Fähigkeit besitzen, das zusätzliche Rührwerk (92) zu regeln, und es ferner Mittel zum Steuern der Qualität des Abfalls des Filters (2) umfasst, die mit den Verarbeitungsmitteln in Datenkommunikation verbunden sind, und die einen Förderer (10) und ein Wiegeband für Abfall vom Filter (2), eine Visualisierungsvorrichtung (11) über dem Abfall, Mittel zum Messen der Feuchtigkeit (14) des Abfalls, Mittel zum Messen des Volumens (15) des Abfalls, einen weiteren Tank (12) und eine weitere Pumpe (13) umfassen.

2. Verbessertes Filtersystem nach Anspruch 1, **dadurch gekennzeichnet, dass** das flüssige Medium Wasser ist.

3. Verbessertes Filtersystem nach Anspruch 2, **dadurch gekennzeichnet, dass** das flüssige Medium Wasser mit Glaspartikeln oder Ähnlichem in Suspension oder anderen speziellen Materialien ist, die allgemein in der optischen Industrie verwendet werden.

4. Verbessertes Filtersystem nach Anspruch 1, **dadurch gekennzeichnet, dass** das Filter (2) ein Anschwemmdruckfilter ist.

5. Verbessertes Filtersystem nach Anspruch 1, **dadurch gekennzeichnet, dass** die Rührmittel im flüssigen Medium im Tank ein Rotationsrührwerk (4) mit einer vertikalen Welle und einem Antrieb mit variabler Drehzahl, der von den Verarbeitungsmittelm gesteuert wird, umfassen.

6. Verbessertes Filtersystem nach Anspruch 1, **dadurch gekennzeichnet, dass** die Verarbeitungsmittel einen Mikroprozessor (7) umfassen.

7. Verbessertes Filtersystem nach Anspruch 1, **dadurch gekennzeichnet, dass** die Mittel zum Messen der Trübung des flüssigen Mediums einen Trübungssensor (5) umfassen.

8. Verbessertes Filtersystem nach Anspruch 1, **dadurch gekennzeichnet, dass** die Mittel zum Messen der Betriebsdurchflussrate des Filters einen Durchflussmesser (6) umfassen.

9. Verbessertes Filtersystem nach Anspruch 1, **dadurch gekennzeichnet, dass** die Beförderungsmittel für das flüssige Medium vom Sammeltank (1) zum Filter (2) eine Pumpe (8) umfassen.

10. Verbessertes Filtersystem nach Anspruch 1, **dadurch gekennzeichnet, dass** die Mittel zum Steuern der Qualität des Abfalls analoge und digitale Eingabe- und Ausgabemodule zum Kommunizieren mit den Verarbeitungsmittel in beinhalten.

11. Verbessertes Filtersystem nach Anspruch 1, **dadurch gekennzeichnet, dass** die Visualisierungsvorrichtung (11) über dem Abfall in der Lage ist, makroskopische Eigenschaften des Abfalls selbst zu messen, und eine Videokamera und ein Kommunikationssystem umfasst, die mit Bezug auf Bilder des Abfalls mit den Verarbeitungsmitteln in Datenkommunikation stehen, wobei die Verarbeitungsmittel außerdem mit einem Analyseprogramm für die empfangenen Bilder ausgerüstet ist, das die Fähigkeit aufweist, diese Bilder mit einer Bildbibliothek, die im Speicher der Verarbeitungsmittel gespeichert ist, zu vergleichen.

12. Verbessertes Filtersystem nach Anspruch 1, **dadurch gekennzeichnet, dass** die Mittel zum Messen der Feuchtigkeit (14) einen Leitfähigkeitsmesssensor umfassen.

13. Verbessertes Filtersystem nach Anspruch 1, **dadurch gekennzeichnet, dass** die Mittel zum Messen des Volumens (15) ein Teil (16) in Form eines Candela- oder eines länglichen Zylinders umfassen und die Seitenfläche (17) des Teils (16) zum Anhaften einer Abfalltafel oder -platte vom Filter (2) fähig ist.

14. Verbessertes Filtersystem nach Anspruch 1, **dadurch gekennzeichnet, dass** der Sammeltank (1) für zu behandelndes Wasser eine vertikale Anordnung mit einer im Wesentlichen rechteckigen polygonalen Geometrieebene aufweist.

15. Verbessertes Filtersystem nach Anspruch 1, **dadurch gekennzeichnet, dass** der Sammeltank (9) für das jetzt behandelte Wasser vom Filter (2) eine vertikale Anordnung mit einer im Wesentlichen rechteckigen polygonalen Geometrieebene aufweist.

16. Verwendung des verbesserten Filtersystems, das in einigen der vorhergehenden Ansprüche beschrieben ist, um Glaspartikel in Suspension zu beseitigen, die sich in einem flüssigen Medium befinden und aus der Verwendung des flüssigen Mediums zum Kühlen von Diamantschleifpunkten, die für Anwendungen in der Glasindustrie verwendet werden, resultieren.

## Revendications

1. Un système de filtrage perfectionné, approprié pour filtrer et éliminer des particules en suspension d'un milieu liquide, comprenant un réservoir de collecte (1) pour le milieu liquide, un filtre (2), des moyens de propulsion du milieu liquide depuis le réservoir de collecte (1) vers le filtre (2), et comprenant en outre des moyens d'agitation du milieu liquide dans le réservoir (1), des moyens de mesure de la turbidité du milieu liquide dans le réservoir (1), des moyens de dosage (3) d'un produit coadjuvant de filtration dans le réservoir (1), des moyens de mesure du débit de fonctionnement du filtre (2) et des moyens de traitement, les moyens de traitement étant reliés en communication de données avec les moyens d'agitation du milieu liquide dans le réservoir (1), les moyens de mesure de la turbidité du milieu liquide dans le réservoir (1), les moyens de dosage d'un produit coadjuvant de filtrage dans le réservoir (1), les moyens de mesure du débit de fonctionnement du filtre (2) et les moyens de propulsion du milieu liquide et ayant la capacité de régler les moyens d'agitation du milieu liquide, les moyens de dosage (3) d'un produit coadjuvant et les moyens de propulsion du milieu liquide,
**caractérisé en ce qu'**il comprend en outre un autre réservoir de collecte (9) de l'eau déjà traitée provenant du filtre (2), et un autre capteur de turbidité (91) et un autre agitateur supplémentaire (92) dans ledit réservoir (9) reliés en communication de données avec les moyens de traitement, les moyens de traitement ayant la capacité de réguler l'agitateur supplémentaire (92), et **en ce qu'**il comprend aussi en outre des moyens de contrôle de la qualité des déchets du filtre (2) reliés en communication de données avec les moyens de traitement, et qui comprennent une bande transporteuse (10) et de pesage des déchets du filtre (2), un dispositif de visualisation (11) au-dessus desdits déchets, des moyens de mesure de l'humidité (14) des déchets, des moyens de mesure du volume (15) des déchets, un autre réservoir (12) et une autre pompe (13).

2. Système de filtrage perfectionné selon la revendication 1, **caractérisé en ce que** le milieu liquide est de l'eau.

3. Système de filtrage perfectionné selon la revendication 2, **caractérisé en ce que** le milieu liquide est de l'eau avec des particules de verre ou similaires en suspension, ou d'autres matériaux spéciaux couramment utilisés dans l'industrie optique.

4. Système de filtrage perfectionné selon la revendication 1, **caractérisé en ce que** le filtre (2) est un filtre sous pression à précouche.

5. Système de filtrage perfectionné selon la revendication 1, **caractérisé en ce que** les moyens d'agitation du milieu liquide dans le réservoir comprennent un agitateur rotatif (4) à axe vertical et un entraînement à vitesse variable contrôlé depuis les moyens de traitement.

6. Système de filtrage perfectionné selon la revendication 1, **caractérisé en ce que** les moyens de traitement comprennent un microprocesseur (7).

7. Système de filtrage perfectionné selon la revendication 1, **caractérisé en ce que** les moyens de mesure de la turbidité du milieu liquide comprennent un capteur de turbidité (5).

8. Système de filtrage perfectionné selon la revendication 1, **caractérisé en ce que** les moyens de mesure du débit de fonctionnement du filtre comprennent un débitmètre (6).

9. Système de filtrage perfectionné selon la revendication 1, **caractérisé en ce que** les moyens de propulsion du milieu liquide du réservoir de collecte (1) vers le filtre (2) comprennent une pompe (8).

10. Système de filtrage perfectionné selon la revendication 1, **caractérisé en ce que** les moyens de contrôle de la qualité des déchets intègrent des modules d'entrée et de sortie analogiques et numériques pour communiquer avec les moyens de traitement.

11. Système de filtrage perfectionné selon la revendication 1, **caractérisé en ce que** le dispositif de visualisation (11) au-dessus des déchets est capable de mesurer les propriétés macroscopiques des déchets eux-mêmes, et comprend une caméra vidéo et un système de communication, en communication de données relatives aux images des déchets avec les moyens de traitement, les moyens de traitement étant également équipés d'un programme d'analyse des images reçues avec la possibilité de comparer ces images avec une bibliothèque d'images stockées dans la mémoire des moyens de traitement.

12. Système de filtrage perfectionné selon la revendication 1, **caractérisé en ce que** les moyens de mesure de l'humidité (14) comprennent un capteur de mesure de conductivité.

13. Système de filtrage perfectionné selon la revendication 1, **caractérisé en ce que** les moyens pour mesurer le volume (15) comprennent une pièce (16) en forme de candela ou de cylindre allongé, et la surface latérale (17) de ladite pièce (16) est apte pour l'adhésion d'un gâteau de ou d'une plaque de déchets provenant du filtre (2).

14. Le système de filtrage perfectionné, selon la revendication 1, **caractérisé en ce que** le réservoir de collecte (1) d'eau à traiter présente une disposition verticale avec un plan de géométrie polygonale essentiellement rectangulaire.

15. Le système de filtrage perfectionné, selon la revendication 1, **caractérisé en ce que** le réservoir de collecte (9) de l'eau déjà traitée provenant du filtre (2) a une disposition verticale avec un plan de géométrie polygonale essentiellement rectangulaire.

16. Utilisation du système de filtrage perfectionné décrit dans certaines revendications précédentes, pour éliminer des particules de verre en suspension présentes dans un milieu liquide, résultant de l'utilisation dudit milieu liquide pour refroidir des meules diamantées utilisées pour des applications dans l'industrie du verre.
